# EUROPEAN PATENT APPLICATION

(11) **EP 4 485 314 A1**
(43) Date of publication of application: **01.01.2025**
(21) Application number: 23758837.1
(22) Date of filing: 24.02.2023
(51) Int. Cl.: G06Q 20/06, G06Q 40/04, G06Q 50/06, G01R 11/00

(54) **INTEGRATED SYSTEM AND METHOD FOR ISSUING DIGITAL ASSETS OR TOKENS BASED ON AUTHENTICATED CONSERVATION METRICS**

(30) Priority: 25.02.2022 BR 102022003708
(71) Applicant: THINGS GO ONLINE - CONSULTORIA, DESENVOLVIMENTO E TECNOLOGIA EM MÉTRICAS E TOKENS DE IMPACTOS AMBIENTAIS E SOCIAIS LTDA, São Paulo 01411- 001 (BR)
(72) Inventor: Remer, Ricardo Amaral, 01411-010 São Paulo (BR); Carvalho, Rogério Atem De, 28030-131 Campos dos Goytacazes (BR); Fernandes, Rodrigo Martins, 28030-570 Campos dos Goytacazes (BR)
(74) Representative: Grünecker Patent- und Rechtsanwälte PartG mbB
(86) International application number: PCT/BR2023/050060
(87) International publication number: WO 2023/159291

(57) **Abstract**

The present invention is in the fields of Environmental Engineering, Systems Engineering and Digital Assets. More specifically, the invention relates to an integrated system and method for issuing digital assets or tokens ballasted by authenticated conservation metrics. The system of the invention is particularly useful for measuring, documenting, authenticating and tokenizing, in platforms or technologies blockchain, distributed digital ledger, metrics related to sustainable or environmental conservation attitudes and/or projects. The system of the invention comprises: one or more devices for measuring physical quantities associated with the conservation or recovery of environmental assets; and a distributed digital ledger process for the authenticated metrics. In one embodiment, the system of the invention further comprises a device for checking the authenticity of the hardware and software that process the measured signals and that make up the measuring device. The invention is particularly useful for the online documentation of authenticated environmental conservation metrics that serve as ballast for the digital assets documented by the system itself. In one embodiment, the invention provides for the tokenization of energy savings related to the use of DAG (Direct Acyclic Graphs) in the consensus mechanism of distributed digital ledger technologies, such as the XRP ledger. The invention is a useful tool for boosting investments in environmental recovery or conservation projects, in addition to providing real, online and publicly auditable ballast for digital assets.

## Description

### Field of the Invention

The present invention is in the fields of Environmental Engineering, Systems Engineering and Digital Assets. More specifically, the invention relates to an integrated system and method for issuing digital assets or tokens ballasted by authenticated conservation metrics. The system of the invention is particularly useful for measuring, documenting, authenticating and tokenizing, in platforms or technologies blockchain, distributed digital ledger, metrics related to sustainable or environmental conservation attitudes and/or projects. The system of the invention comprises: one or more devices for measuring physical quantities associated with the conservation or recovery of environmental assets; and a distributed digital ledger process for the authenticated metrics. In one embodiment, the system of the invention further comprises a device for checking the authenticity of the hardware and software that process the measured signals and that make up the measuring device. The invention is particularly useful for the online documentation of authenticated environmental conservation metrics that serve as ballast for the digital assets documented by the system itself. In one embodiment, the invention provides for the tokenization of energy savings related to the use of DAG (Direct Acyclic Graphs) in the consensus mechanism of distributed digital ledger technologies, such as the XRP ledger. The invention is a useful tool for boosting investments in environmental recovery or conservation projects, in addition to providing real, online and publicly auditable ballast for digital assets.

### Background of the Invention

The technical field of digital asset ledger systems is vast, with several approaches being known regarding consensus algorithms or the processes involved in the corresponding transactions. In this context, the so-called "tokenization" of digital assets emerges as a great opportunity to modernize the infrastructure of financial systems and improve capital markets, since it provides new platforms that provide access to credit and financing and, consequently, investment. Tokenization is a technical approach that provides several advantages, including increased liquidity and the creation of new opportunities for investors and token issuers.

Within the context of distributed ledger technology (DLT), where Blockchain currently stands out, tokenization is the way to represent a specific asset through the issuance of tokens that represent fractions of the value of the respective asset, such tokens being applicable to practically all economic activities and for a varied number of purposes - from raising capital to fractioning assets to unlock their liquidity and value. Just like a coupon or voucher exchangeable for a good, a token can represent a fraction of any tradable asset, such as equity, debt, real estate, commodities, etc.

In recent years, tokenization has attracted a lot of attention and gained followers as a means of modernizing financial infrastructure, with several banks currently using this technology to improve the performance and security of operations.

In the specific field of sustainability, several initiatives called "sustainable" have emerged, but they face some technical problems, including: the difficulty of measuring and/or authenticating environmental conservation/sustainability metrics; how to avoid merely speculative initiatives (known as greenwashing); and how to reward conservation activities or sustainable attitudes in a clear, objective and audited way. The present invention fills this gap by providing a technology that solves these and other technical problems, and refers to "TGO," an abbreviation for Things Go Online, used to name the tokens in the system of the invention.

The Prior Art that embraces the invention includes the following documents.

Patent application BR10 2017 016011 4, filed by Biotecam on July 26, 2017, and withdrawn, its content being an industrial and business secret of the aforementioned Applicant, is entitled "Giveback - the return to society of the social footprint." Said document contemplates the concept of GIVEBACK^{®} as a creation that aims to invite human beings to return to society part of their existential legacy - the social or environmental footprint. The concept of GIVEBACK^{®} also permeates a business model that is a business secret and according to which anyone who perceives the relevance of a given project or initiative of social or environmental interest can collaborate financially with such project or initiative. Examples include, but are not limited to, voluntary contributions to projects of social or environmental interest. An embodiment is a process of assigning value to each GIVEBACK^{®}, using a specific metric for each project, such as the CONSERVÔMETRO^{®}, which, among other metrics, measures the amount of oxygen effectively dissolved in water through the use of forced aeration equipment. The deliberate dissolution of oxygen in water aims to return to the water the oxygen that was consumed or demanded due to the human footprint, such as the release of organic loads into water bodies such as rivers and lakes. In this context, people who are interested in contributing to the conservation or recovery of liquid bodies can "GIVEBACK^{®}," that is, return to society at least part of their footprint. The CONSERVÔMETRO^{®} acts, in one of several ways, as equipment or a device that assists in the return metric, in the particular case of returning oxygen to water, through its dissolution, it can be used to assign value to the GIVEBACK^{®}.

Patent application BR 10 2019 021409 0, entitled "Conservômetro, Equipment and System for Signal Transduction in Conservation Credits and for Documenting Metrics for Conservation or Recovery of Environmental Assets", was filed by Biotecam on October 11, 2019. The aforementioned document discloses and expands the concept of the CONSERVÔMETRO^{®}, which is an equipment or system for signal transduction in conservation credits and for documenting metrics for conservation or recovery of environmental assets, which include, but are not limited to: energy and/or fuel conservation; reduction of emissions of undesirable, polluting or greenhouse gases, such as carbon dioxide, methane and hydrogen sulfide, for example; large-scale capture of carbon dioxide; recovery and/or conservation of water quality in water bodies; effluent treatment; and combinations thereof. The concept of conservometrics measurement made technically feasible in the aforementioned document is particularly useful for measuring any initiative for conservation or recovery of environmental assets, with the metrics being documented and accredited by CONSERVÔMETRO^{®} for the purpose of better parameterizing the market for environmental services. In one embodiment of the aforementioned document, the aforementioned metrics are authenticated and recorded in a distributed digital ledger, such as "ledgerization" or "blockchainization" technologies. The aforementioned patent application incorporated herein by reference contemplates an approach used in the present invention as a way to measure physical quantities online and document the metrics associated with environmental conservation, also online, providing ballast for the respective digital assets subsequently recorded in distributed digital ledger systems.

Patent application BR 10 2021 001278 1 (still within confidentiality period), entitled "Device and method for authentication of embedded hardware and/or software" was filed by Rogério Atem de Carvalho on January 22, 2021. Said document improves on the approaches for authentication of embedded hardware and/or software known by then. Said method comprises the steps of: a) obtaining an identified record of each unique hardware and software device; b) subsequently interrogating this same unique hardware and software device to compare said identified record obtained in the interrogation with that previously recorded; and c) identifying corruption, tampering and/or invasion/eavesdropping of the embedded hardware/software set when the comparison of the records does not result in a match. The approach is particularly useful for authenticating embedded hardware and/or software, identifying eavesdropping and/or tampering with hardware and/or software, locally or remotely, in a single instance, periodically or continuously - being useful, among others, for ensuring the reliability of data and/or metrics of technical and/or economic relevance measured by an integrated set of hardware and software. In one embodiment, said device and method is applied to the authentication of the CONSERVÔMETRO^{®} which is the subject matter of patent application BR 10 2019 021409 0. Said patent application incorporated herein by reference contemplates an approach used in the present invention as a way to authenticate the embedded hardware and software, which act in the steps of measuring physical quantities and their authentication prior to the step of ledgerization or distributed digital asset ledger.

Patent application EP3054405A1, filed by Ripple Labs Inc on 02 Feb 2016, is entitled "Temporary consensus subnetwork in a distributed network for payment processing." Said document discloses a computer-implemented method or system for payment transactions. The transaction parties are associated with a computer-based digital record storage in a consensus network containing a plurality of nodes, each comprising a respective computer with record storage and being based on consensus determinations.

The US patent application US2020193540 A1, entitled "Automated settlement of a provisional payment for a commodity using a distributed ledger", was filed by Abaxx Tech Inc. on November 22, 2019. Said document discloses a computer-implemented method for executing smart contracts for a commodity including: establishing, on a computer server, a provisional price for a commodity on a first date and for delivery on a future second date, and establishing, on said server, a partial payment price on the first date on the first day for said commodity. The method includes a step of receiving on said server payment of the partial price by a buyer of the commodity, tracking the value of the commodity over time between the first date and the second date. It also includes establishing with the server a trading price for the commodity as of the 2^{nd} day after the transaction and transferring the remaining trading value of the commodity to the buyer.

Patent US10600050B1, granted on Mar 24, 2020, is entitled "Secure custody of a ledger token and/or a quantity of cryptocurrency of a distributed ledger network through binding to a possession token". Said document discloses a method, a device and a system for the secure custody of a ledger token and/or a quantity of cryptocurrency of a distributed digital ledger through binding to a token. The method comprises: a) generating a first pair of public-private keys comprising a public key usable as a public address of a distributed ledger token and a private key usable to transfer the distributed ledger token from the public address to another public address; b) generating a data store comprising a unique identifier and storing in said store the private key usable to transfer the distributed ledger token from one public address to another public address; c) encrypting the private key in the data store; d) authenticating a first computing device; e) transmitting the public address to the first computing device through an encrypted communication channel; f) verify whether the transaction record in the distributed ledger network meets the finality requirement based on a consensus algorithm of the distributed network; g) generate a token storable in a physical memory that, in order to remain unique, evolves a state of the token upon the occurrence of an event; h) in which the event comprises the transfer between two or more electronic safes in the network; i) associate the data store with said token; and j) transfer the token to a second computing device in the network.

The Bitcoin Energy Consumption Index, for example (available online by simply typing the expression itself), details, for Bitcoin, the amount of energy consumed per year in TWh (TeraWatts hour), currently standing at 204.5 TWh (the energy consumption of an entire country like Thailand), with an associated carbon footprint of 97.1 Mton of CO2 (97.1 million tons of CO2 per year). Said index indicates that the footprint of each Bitcoin transacted consumes 2.2 MWh (the average 76-day energy consumption of a typical US home) and 1.05 tons of CO2 (that is, for each Bitcoin transacted, a little over a ton of CO2 is emitted).

The Ethereum Energy Consumption Index (available online by simply typing the expression itself) details, for Ethereum, the amount of energy consumed per year in TWh (TeraWatts hour), currently standing at 113.1 TWh (the energy consumption of an entire country like the Netherlands), with an associated carbon footprint of 53.7 Mton of CO2 (53.7 million tons of CO2 per year). Said index indicates that the footprint of each Ethereum transacted consumes 0.26 MWh (the average consumption of approximately 9 days of energy of a typical home in the US) and 0.125 tons CO2 (that is, for each Ethereum transacted 125 kg CO2 are emitted).

The paper entitled "Energy Consumption Analysis of XRP Validator," by Crystal Andrea Roma and M. Anwar Hasan of the Department of Electrical and Computer Engineering at the University of Waterloo in Canada, discloses important aspects of the energy consumption inherent in the technologies used in certain cryptocurrencies. The authors discuss the very high energy consumption of Bitcoin, Ethereum, Visa transactions, and also XRP, in addition to evaluating several ways to measure the real energy consumption associated with said technologies. The paper concludes that the technology used in the XRP ledger is the most sustainable of those analyzed, with a power consumption in the default configuration of approximately 25Wh, that is, substantially lower than Ethereum and much more substantially lower than Bitcoin.

The present invention uses, in some of its embodiments, the XRP ledger as tokenization technology due to its lower energy consumption and greater sustainability, in line with the purpose of the invention itself.

The present invention uses, in some of its embodiments, a device or Joker that is the subject of the co-pending patent application entitled "Device and system for measuring quantities, processing data and integrating with a system for issuing digital assets or tokens," which has some of the present co-inventors in common and was filed on the same day as this one.

From what can be inferred from the literature researched, no documents were found anticipating or suggesting the teachings of the present creation/secret/invention. The invention herein disclosed has, in the view of the inventors, novelty and inventive activity compared to the state of the art.

### Summary of the Invention

The invention relates to an integrated system and method for issuing digital assets or tokens ballasted by authenticated conservation and/or sustainability metrics.

A relevant aspect of the invention is to solve the problem of the lack of ballasting for digital assets. Another problem solved by the invention is to provide a tool for measuring real physical quantities associated with sustainability and environmental conservation; the documentation and authentication of these metrics; and the issuance of digital assets in distributed ledger systems, all online and in an authenticated manner.

The system of the invention is particularly useful for the documentation, authentication and tokenization, in distributed digital ledger platforms or technologies, authenticated online metrics related to sustainable or environmental conservation attitudes and/or projects.

The system of the invention comprises:
- one or more devices for measuring physical entities/quantities associated with the sustainability, conservation or recovery of environmental assets, providing environmental conservation metrics; and
- a distributed or blockchain digital registration process of authenticated metrics and the issuance of digital assets ballasted by said metrics; and
- a process for issuing conservation credit certificates (GIVEBACK), based on digital assets ballasted by environmental conservation and sustainability metrics, documented in a distributed digital registry or blockchain.

In one embodiment, the system of the invention comprises:
- one or more devices for measuring physical entities/quantities associated with the sustainability, conservation or recovery of environmental assets, providing sustainability and/or environmental conservation metrics;
- a device or method for verifying the authenticity of hardware and software, which processes the signals measured on said measuring device and authenticates said metrics; and
- a distributed digital ledger process of authenticated metrics and the issuance of digital assets ballasted by said metrics.

In some embodiments, said device for measuring physical entities/quantities is the one described in the co-pending patent application and with some of the present inventors in common, entitled "Device and system for measuring quantities, processing data and integrating with a system for issuing digital assets or tokens." In some embodiments, said device comprises:
- a Joker base device with processing capacity, data storage and embedded computer program/software;
- an electronic board equipped with sensors for measuring physical quantities;
- one or more physical and logical interfaces to provide communication between the Joker processing unit and the board processing unit; and
- a network interface that uses network communication means to access a local computer network or the Internet and communicate with nodes in a blockchain network.

In some embodiments, the distributed digital ledger process step of authenticated metrics is done with distributed ledger technology that uses DAG (Direct Acyclic Graphs) in the consensus mechanism, as is the case with the XRP ledger (ripple) due to its lower energy consumption and greater sustainability, in line with the purpose of the invention itself.

Another object of the invention is to provide tokenized metrics of Conservation Credits related to the saving of electrical energy and/or CO2 emitted by the use of energy-efficient blockchain technology, when compared with other related/competing technologies and applications, in which the objective metric is that resulting from the reduction in electrical energy consumption in kWh and/or reduction in CO2 emissions.

Another object of the invention is to tokenize the energy consumption savings and CO2 emission reduction resulting from the use of XRP technology.

The invention is particularly useful for the online documentation of authenticated environmental conservation metrics, which serve as ballast for digital assets documented by the system itself. The invention is a useful tool for boosting investments in environmental recovery or conservation projects, in addition to providing real and online ballast for digital assets.

In one embodiment, the system of the invention measures online the amount of CO₂, CH₄ or other gases not emitted, H₂O conserved or recovered, energy (kWh) conserved or produced by renewable sources, among other conservation metrics, authenticates the measurement and its documentation, and records, in a distributed digital ledger, a digital asset ballasted by the respective authenticated conservation metrics.

These and other objects of the invention will be immediately acknowledged by those skilled in the art and by companies with interests in the segment, and it will be described in sufficient detail for their reproduction in the following description.

### Brief Description of the Figures

The following figures are presented:

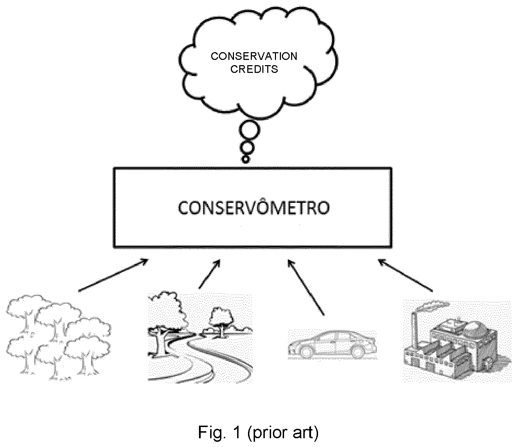

Fig. 1 (prior art BR 10 2019 021409 0) schematically shows the concept of conservometrics and the CONSERVÔMETRO^{®}, showing different sources of environmental conservation or recovery data, including forests, rivers, transportation systems, and industries, from which conservation or recovery data of environmental assets are obtained and/or measured, in which such data or signals are processed by the CONSERVÔMETRO^{®} and the corresponding CRÉDITOS DE CONSERVAÇÃO^{®} communicated in different communication environments.

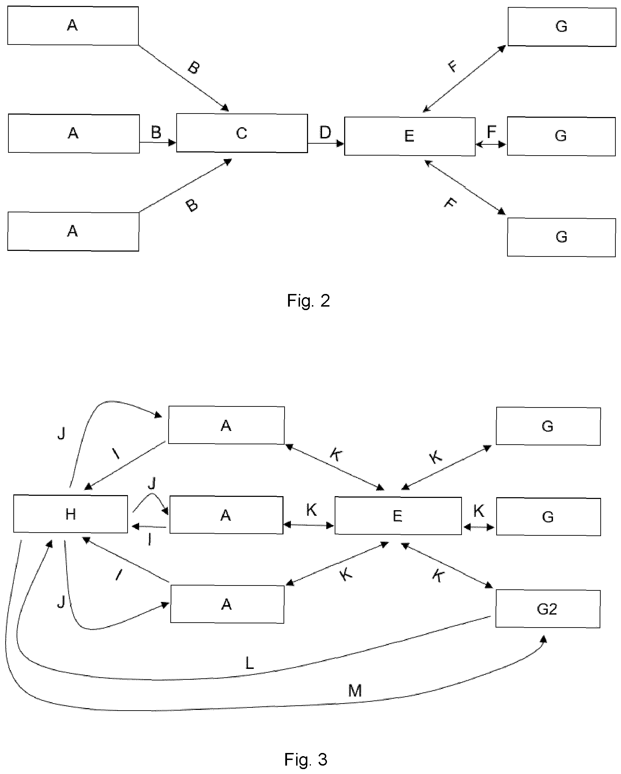

Fig. 2 shows a functional block diagram of an embodiment of the system of the invention. There are shown A) measuring devices/sensors; B) token issuance process; C) distributed digital ledger; D) integration of the issued token into the distributed digital ledger; E) securities brokerage in distributed digital ledger or blockchain; F) issuance and execution of trading orders; G) buyer/seller client.
Fig. 3 shows a functional block diagram of an embodiment of the invention system with a certifying entity. There are shown in A) measuring devices/sensors; E) centralized or decentralized digital asset brokerage in a distributed digital ledger or blockchain; G) buyer/seller client; G2) companies/entities or individuals supporting sustainable projects; H) Invention system and certifying entity: they issue, respectively, TGO tokens and certified tokens (GIVEBACK); I) the token issued from the metric originating from the authenticated measurement (CO₂ not emitted or captured, kWh conserved, for example) is sent to a certifying entity; J) exchange between the token issued from the metric originating from the authenticated measurement and the TGO token; K) TGO trading (buy and sell orders); L) company/entity/person buys the TGO token from the brokerage and sends it back to the TGO issuer/distributor; M) the certifying entity issues a certified TGO token, which certifies the value that the company/entity acquired.

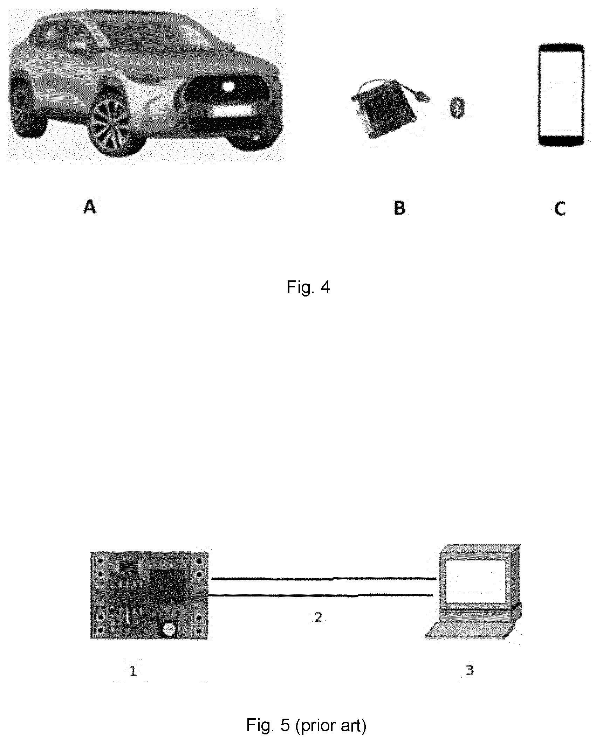

Fig. 4 shows details of an embodiment of the invention in which a *conservômetro* [conservation meter] communicates conservation metrics/credits as a metric of CO₂ emission reduction by a hybrid vehicle (B) equipped with a regenerative kinetic energy recovery system. In A) a data acquisition and communication device are shown schematically. In said embodiment, the measurement is made on device A) or on an integrated version thereof and embedded in the vehicle command unit; the corresponding tokens are generated in accordance with the functional diagram of Fig. 2 or 3 and made available to a user device C).
Fig. 5 (prior art BR 10 2021 001278 1) schematically shows an embodiment of an authenticator setup, in which the element numbered 1 is the Device Under Authentication (DSA), the element numbered 3 is the Authentication Verifier Device (DVA) and the elements numbered 2 are the Physical Input and Output Interfaces (IFES) present in both the DSA and the DVA and which exchange authentication data between them. The DSA is schematically/iconically represented by a printed circuit board, although such a device is not limited to just one board, and may be a more complex device, composed of several boards. The DVA is iconically represented by a personal computer, which may be a personal computer, a microcontroller or any computer element, as long as it has the IFES necessary for communication with DSA. The interfaces are represented iconically by lines and must be interpreted as insulated cables and implemented in accordance with the technique for readings free from electromagnetic, temperature and humidity interference.

### Detailed Description of the Invention

The invention provides an integrated system and method for issuing digital assets or tokens ballasted by authenticated conservation metrics.

A relevant aspect of the invention is to solve the problem of the lack of ballasting for digital assets. Another problem solved by the invention is to provide a tool for measuring real quantities associated with environmental conservation; the documentation and authentication of these metrics; and the issuance of digital assets in distributed ledger systems, all online and in an authenticated manner.

The system of the invention is particularly useful for the documentation, authentication and tokenization, in distributed digital ledger platforms or technologies, metrics related to sustainable or environmental conservation attitudes and/or projects.

The invention is also defined by the following provisions:

Integrated system and method for issuing digital assets or tokens associated with environmental conservation and sustainability metrics comprising:
- one or more devices for measuring physical entities/quantities associated with the sustainability, conservation or recovery of environmental assets, providing environmental conservation metrics that serve as physical ballast for digital assets; and
- a distributed digital ledger process of authenticated metrics and the issuance of digital assets ballasted by said metrics.

System and method as described above, wherein the distributed digital ledger process of authenticated metrics is done with distributed ledger technology that uses DAG (Direct Acyclic Graphs) in the consensus mechanism.

System and method as described above, additionally comprising a process for issuing conservation credit certificates based on digital assets ballasted by environmental conservation and sustainability metrics, documented in a distributed digital ledger or blockchain.

System and method as described above, wherein said device for measuring physical entities/quantities comprises:
- a Joker base device with processing capacity, data storage and embedded computer program/software;
- an electronic board equipped with sensors for measuring physical quantities;
- one or more physical and logical interfaces to provide communication between the Joker processing unit and the board processing unit; and
- a network interface that uses network communication means to access a local computer network or the Internet and communicate with nodes in a blockchain network.

System and method as described above, wherein said measuring device of physical entities/quantities comprises:
- a Joker in the form of software embedded in a device for measuring the electrical power input of the computer that performs computations, obtaining from the device's primary memory the quantities read from the medium and computing the electrical power consumption metrics of the validating nodes (computers) of the XRP Ledger blockchain network; or
- a Joker in the form of a computer programming code installed in the validating nodes (computers) participating in the XRP Ledger blockchain network, which performs computations, obtaining from the primary memory of the computer where it is installed the quantities read directly from its motherboard.

System and method as described above, wherein the tokenized Conservation Credits metric is the savings in electrical energy and/or CO2 emitted by using XRP ledger blockchain technology.

System and method as described above, wherein the tokenized Conservation Credits metric is sustainable electrical energy generation from solar panels.

A system and method as described above further comprising a hardware and software authenticity verification device or method for processing the signals measured on said measuring device and authenticating said metrics.

System and method as described above comprising at least one authenticity checking device for connection to the device to be authenticated comprising input and output interfaces, said authenticity checking device comprising at least one embedded hardware and software integrated authentication method comprising the steps of:
- generate individual hashes in the authenticity checking device software and at the device to be authenticated;
- determine the electromagnetic signature of the device to be authenticated when connected;
- assemble an identified record of the unique hardware and software device containing: generated hashes, generated signatures, serial number of the hardware device, established Similarity Threshold and date-time in milliseconds obtained at the time of assembly; and
- store the identified record of the unique device in a remotely accessible database to check for similarity or dissimilarity.

### Measuring Step

The step in which one or more devices for measuring physical entities/quantities associated with the sustainability, conservation or recovery of environmental assets provide sustainability or environmental conservation metrics. Said step comprises the use of a device for measuring a physical quantity of environmental interest that operates in a system comprising a plurality of functional layers with high cohesion and low coupling, implemented in a combination of hardware and software. In one embodiment, said layers include: a) a layer corresponding to a calibrated measuring device/instrument/sensor; b) a layer corresponding to a data processing unit or computer device; c) a layer corresponding to a secure and accredited measuring device/instrument; d) a cryptography layer for performing transaction signatures on a blockchain or DLT network; and e) a layer corresponding to a secure communications device/instrument.

From the point of view of the devices, the system that provides environmental conservation metrics (or *conservômetro*) comprises: a calibrated instrumentation device that is a sensor; a computer device selected from a microcontroller, a PC, PC 104, a virtual machine or other computing architectures; a secure and accredited measuring device selected from software, a remotely installed software mirror, software in a virtual machine, firmware, programmable hardware of the Field Programmable Gate Array (FPGA) or Application Specific Integrated Circuit (ASIC) type. In one embodiment, said secure and accredited measuring device implements the steps of: a) reading the measured data from the primary memory of the computer device; b) checking and discarding spurious data; c) computing the conversion of the data into information according to the physical or chemical quantity read; and d) storing the generated information in the primary or secondary memory of the computer device.

In one embodiment, the measurement step is performed with a Joker or physical entity/quantity measuring device as described in the co-pending patent application and with some of the present inventors in common, entitled "Device and system for measuring quantities, data processing and integration with a digital asset or token issuance system." Said device comprises:
- a Joker base device with processing capacity, data storage and embedded computer program/software;
- an electronic board equipped with sensors for measuring physical quantities,
- one or more physical and logical interfaces to provide communication between the Joker processing unit and the board processing unit; and
- a network interface that uses network communication means to access a local computer network or the Internet and communicate with nodes in a blockchain network.

In one embodiment, the step that provides environmental conservation metrics additionally comprises a means of checking the authenticity of the secure measuring device selected from: encrypted key; hash or similar technique; remote storage in databases or in distributed digital ledgers.

### Tokenization step based on environmental conservation metrics obtained online from physical measurements

This stage comprises a system for measuring, recording and trading quantities in a distributed digital ledger network or blockchain network. In one embodiment, described together with the Fig. 2, the system is described by a functional block diagram consisting of a device for measuring quantities (A), for example hardware with embedded software, responsible for measuring or translating any types of measurable quantities and issuing and transferring a token (B) registered in a distributed digital ledger network or blockchain (D), which has integration (D) with a securities broker (E) for trading tokens, this integration (D) being able to be native or not to said distributed digital ledger network or blockchain (C), which broker (E) enables the trading of tokens issued and transferred (B) between buyer/seller clients (G), through the issuance and execution of trading orders (F).

In another embodiment, the system contemplates the role of a Certifying Entity (H), as illustrated in the block diagram in Fig. 3, responsible for receiving the tokens issued and transferred (I) by the measuring devices (A) and sending, in return for these, an equivalent quantity of tokens, called TGO, issued by the certifying entity itself (J), which are used for trading in the market (K) of securities brokers, whether or not native to the distributed digital ledger or blockchain where the TGO tokens were issued. In this embodiment, any account (client) that holds the TGO tokens issued by the certifying entity may, at any time, return (transfer) these TGO tokens to the issuing account - also known as a "cold wallet" - or to the distributing account - also known as a "hot wallet" - of the certifying entity (H). The TGO token return transaction (L) serves as a record of this action and in exchange a certificate (M) called GIVEBACK will be issued in favor of the account that returned the TGO tokens, containing all the information that characterizes said return action, such as: the date and time, the amount of TGO tokens returned, the price of these tokens at the time of return, the equivalent value in fiat currency, among other specific and optional information, such as: the type and georeferencing of the projects from which the returned TGO tokens originated. This GIVEBACK certificate can also be issued on a blockchain network, which can be the XRP Ledger itself or another, and can be in the format of a notarial note, a non-fungible token (NFT), or another appropriate information storage format.

### Authentication step

The stage for verifying the authenticity of hardware and software processes the signals measured in the aforementioned measuring device and authenticates the metrics obtained in the measurement stage. Its purpose is to guarantee authenticity, that is, to prove that a given object, whether hardware or software, is what it is expected to be and has not been replaced or had its content or composition corrupted in any way. The expression "embedded software" refers to code in computer language written specifically to be encapsulated and dedicated to the hardware or device it will control through a set of predefined tasks that employ specific resources of that hardware.

Thus, authenticating the digital system that comprises hardware and embedded software means authenticating these two elements in an integrated manner. In one embodiment, the authentication step comprises the Device Under Authentication (DSA), which is the hardware device combined with embedded software whose authenticity is to verify the Authentication Verification Device (DVA) the Physical Input and/or Output Interfaces (IFES), present in both the DSA and the DVA and which exchange authentication data between them.

IFES can be connected by physical means, such as wires or cables, such as, but not limited to, Serial, Parallel, USB, RJ45 and others, as well as by electromagnetic means, such as, but not limited to, antennas for Bluetooth, WiFi, Lora, UHF, VHF, GSM and other means of transmitting signals by electromagnetic waves.

The Authenticity Verification Device (AVD) is a computer element, which may be, for example, but not limited to, a personal computer or microcontroller, used to inject data into the DSA and verify, through a test application, the authenticity of the DSA.

The "target application" is the software embedded in the DSA that allows it to perform some function beyond the basic ones, performing computations with a specific purpose and intrinsically linked to the hardware on which it runs. A DSA can have one or more embedded target applications.

### Example 1 - Conservometrics and tokenization of documented metrics in a hybrid car

In this embodiment, a device called a *CONSERVÔMETRO* performs computations, obtaining from the device's primary memory the physical quantities read from the environment and computing the Conservation Credits according to a pre-established algorithm for this purpose. In this embodiment, the *CONSERVÔMETRO* is installed in a vehicle equipped with a hybrid energy/propulsion system using liquid fuel and an electric motor powered by regenerative energy. In this context, the source of generation of Conservation Credits is the vehicle itself and the objective metric is that resulting from the reduction in fuel consumption and consequent reduction in CO₂ emissions.

In this embodiment, the *CONSERVÔMETRO*, that is, the credit measurement and computation system, is installed in the on-board computer or entertainment system of the hybrid vehicle, or through a device connected to an OBD2 port of the vehicle. The measurement of physical quantities related to conservation metrics, together with the authentication of measurements and metrics, provides the measurement, processing and online communication of the environmental service provided by the vehicle in the form of reduced greenhouse gas emissions. The corresponding Conservation Credits can be used by the vehicle owner, or by fleet owners, in: communication of social or environmental responsibility actions; use of said Conservation Credits in environmental compensation measures; an open market for credit trading; or combinations thereof.

Fig. 4 shows details of an embodiment of the invention in which a *conservômetro* communicates conservation metrics/credits as a metric of CO₂ emission reduction by a hybrid vehicle (B) equipped with a regenerative kinetic energy recovery system. In A) a photo of a data acquisition and communication device (Joker) is shown. In said embodiment, the measurement is made on device A) or on an integrated version thereof and embedded in the vehicle control unit; the corresponding tokens are generated in accordance with the functional diagram of Fig. 2 or 3 and made available to a user device C).

In an alternative embodiment of this same example, the device, that is, the credit measurement and computation system, is the Joker referred to above, being installed in the on-board computer or entertainment system of the hybrid vehicle, or even through a device connected to an OBD2 port of the vehicle. In this case, the measurement of the physical quantity related to the conservation metric (fuel not burned or CO2 not emitted) is done in conjunction with the tokenization of the metrics and their online processing/communication provides an environmental service provided by the vehicle with reduced greenhouse gas emissions. The corresponding Conservation Credits can be used by the vehicle owner, by vehicle fleet owners, or traded with companies that want or need said credits. Said credits are useful in: communicating social or environmental responsibility actions; using said Conservation Credits in environmental compensation measures; an open market for trading credits; or combinations thereof. In this embodiment, the Joker or integrated device for measuring and tokenizing physical quantities has the capacity to process and store data and computer programs. It also has a physical and logical interface with an electronic board, responsible for performing single-phase or three-phase measurements of electrical energy, allowing communication between the Joker's processing unit and the board's processing unit. The board has transducers that measure the energy used by the electric motor directly in propulsion, that is, without fuel consumption and without CO2 emissions, whose data is sent to the Joker. With this data, the Joker processes it to transform it into information to be stored in the blockchain through the process of tokenizing the amount of CO2 not emitted. This is done through a network interface that uses network communication means to access a local computer network or the Internet and communicate with the nodes of a blockchain network.

### Example 2 - Conservometrics and Authentication of documented measurements and metrics

In this example, authentication uses, among other things, a "hash value" or simply "hash," which is the transformation of a large amount of data into a small amount of information. A hash is a sequence of bits generated by a hashing algorithm, generally represented in hexadecimal format, which allows display in letters and numbers (0 to 9 and A to F). This sequence seeks to uniquely identify a file or piece of information.

Hash values are generated by Hash Functions, which are algorithms that map variable-length data to fixed-length data. In this example, any provably secure hash function can be used to generate hash values, such as, but not limited to, the 128-bit Whirlpool hash function. In this example, hash values, or simply hashes, are used to uniquely identify files in binary or text format that comprise the underlying software and the target applications, as well as the test application, in order to create unique, or private, keys that uniquely identify the software that is embedded in a given DSA and installed or embedded in the DVA.

In the present example, a "remotely accessible database" is a database that is on a physical medium that is accessible by multiple computing devices and, consequently, by multiple human or automated users. Examples include, but are not limited to, networked or cloud file servers, networked or cloud database servers, or distributed digital ledgers, such as those that employ Blockchain, XRP or similar technology. Other technologies that make data remotely available in a secure and organized manner may also be employed.

In the present example, authentication uses, among other things, the "electromagnetic signature" of a device, which is the spectrum generated by its electromagnetic emissions, or collection of signals that it emits periodically. This spectrum can be represented by a collection of pairs, peaks or points (x, y), where x is the amplitude and y is the frequency of the signal. In the present example, two electromagnetic signatures are considered identical if all the peaks (x, y) that compose them are the same, and are similar if a percentage value of Similarity Threshold between the peaks is reached. This Similarity Threshold must consider the characteristics of the measurement process at the supplier and the user. As an example of Similarity Threshold, if the Electromagnetic Signature of a device is characterized by 50 peaks (x, y), and when compared with another signature only 01 peak with a different x and/or y value is observed, then it is said that the similarity between the two signatures is 98%. If the Similarity Threshold is 95%, for example, then the two signatures are similar, since 98% is greater than 95%.

In this example, the concept of "equality" between peaks (x, y) of an electromagnetic signature can be defined through a two-dimensional window, called a "tolerance window," used to define whether two peaks are "equal." In this way, it is possible to deal with the inaccuracies inherent in the signal reading process, whether at the supplier's site or at the user's site, preventing similar signatures from being classified as dissimilar due to reading problems and not because the DSA was corrupted.

In this context, a method of determining similarity between two electromagnetic signatures is used in the present example with "strict equality" being defined as the usual, mathematical one, and "equality by proximity" being defined as that described using the amplitude and frequency tolerance window.

Starting from point A, which would be a peak of an electromagnetic signature obtained at the supplier's site, distances are defined on the x-axis (amplitude) and y-axis (frequency), creating the tolerance window. All points that fall within this defined window during the reading of the electromagnetic signature made at the user's site will be considered "equal" to A.

In some embodiments of the embedded hardware and/or software authentication step, it is desirable to include an Electromagnetic Signature Verification Method (EMSV), which is implemented by a computer program and described by the following steps:
1. Set the Similarity Threshold;
2. Whether using equality by proximity:
   I. Set distance to amplitude;
   II. Set distance to frequency;
3. Obtain the reading of the Electromagnetic Signature carried out on the supplier's site and store it in a vector;
4. Obtain the reading of the Electromagnetic Signature performed on the user's site and store it in a vector;
5. For each point of the Electromagnetic Signature obtained on the supplier's website:
   I. If strict equality is being employed:
      a. Check if it is equal to the point in the same position in the Electromagnetic Signature vector obtained at the user's site;
      b. If different, increment dissimilar peak counter;
   II. If equality is being used by tolerance window:
      a. Check if the point with the same position in the Electromagnetic Signature vector obtained at the user's site is contained within the tolerance window;
      b. If different, increment dissimilar peak counter;
6. Calculate the Percentage of Dissimilar Peaks as the dissimilar peaks counter divided by the size of the vector created to store the Electromagnetic Signature obtained at the supplier's site;
7. If the percentage of different peaks is equal to zero, the Signatures are equal, if less than the Similarity Threshold, then the Signatures are similar, if greater, the Signatures are dissimilar.

The Test Method for Authentication (MTA) allows for the establishment of more rigorous Similarity Limits when the signature measurement conditions at the supplier and user are technically ideal, or less rigorous when these conditions are not.

The Integrated Authentication Method for Embedded Hardware and Software (MAIHSE) considers a target hardware device that is to be authenticated, the DSA, and a data injector device, the DVA. This method is described/implemented as follows:
i. On the supplier's website:
   1. Install Basic Software on DSA.
   2. Install Target Application(s) on DSA.
   3. Generate individual hashes for the DAS Base Software, the DSA Target Application(s), and the DVA Test Application.
   4. Determine the Electromagnetic Signature of DSA on and off signals from your wireless devices.
   5. Determine the Electromagnetic Signature of each DSA wireless device.
   6. Photograph the DSA with the focus axis perpendicular to the plane of the DSA printed circuit board (PCB) and at a distance that allows perfect framing, both from the front and back.
   7. Assemble a unique hardware and software device identified record containing: hashes generated in (a.3), signature generated in (a.4), signature(s) generated in (a.5), photos of the front and back of the device obtained in (a.6), hardware device serial number, Similarity Threshold established and date-time in milliseconds obtained at the final moment of assembly. The unique record identifier will be a composition between the DSA serial number and the date-time.
   8. Store unique device identification record in remotely accessible database.
   9. Send DSA to user site.
ii. On the user site:
   1. Receive DSA sent in a.9.
   2. Get unique device identified record from remote database generated in a.7 and stored in a.8.
   3. Check photos of the device, generated in a.6: check, by human (visual) or automated (computational) means, whether the device is in the same state and with the same components as those present in the photographs. If it not, return FAILURE.
   4. Check the hash of the Basic Software. If it is not identical to that obtained from the identified record, return FAILURE.
   5. Check the hash of the Target Application(s). If it is not identical to the one(s) obtained from the identified record, return FAILURE.
   6. Check the DVA Test Application hash. If it is not identical to the one obtained from the identified record, return FAILURE.
   7. Physically connect the DVA to the DSA, using the appropriate IFES, with the appropriate cables according to the technical specifications, or providing wireless connections when applicable.
   8. Using the DVA Test Application, activate the Target Application(s) in DSA.
   9. Using the DVA Test Application, test DSA according to the Test Method for Authentication (MTA).

A FAILURE in ii.3 means that visual, manual or automated inspection identified some tampering with the DSA hardware.

A FAILURE in ii.4 means that some tampering in the underlying DSA software has been identified.

A FAILURE in ii.5 means that some tampering was identified in the DSA Target Application(s).

A FAILURE in ii.6 means that some tampering was identified in the DVA Test Application.

To determine SUCCESS or FAILURE in step ii.9, the Test Method for Authentication (MTA) is used.

The MTA is described as follows:
i. Isolate the DSA and DVA in an environment where they are the only two possible devices emitting electromagnetic waves;
ii. Turn on the DSA and measure its electromagnetic signature;
   1. Use the Electromagnetic Signature Verification Method;
   2. If the Electromagnetic Signature is identical or similar, proceed to the next step, if it is not identical or similar, return FAILURE.
iii. Turn on the DVA and measure its electromagnetic signature;
iv. Run the Test Application in DVA:
   1. If the Test Application runs all assertions successfully, check the DSA electromagnetic signature. If the Test Application returns any failed assertions, return FAILURE.
   2. If all electromagnetic signature during testing is identical or similar to expected, return SUCCESS, otherwise return FAILURE due to signature corruption.

The most likely cause of the electromagnetic signature corruption identified in ii.1 is the existence of a hardware component not identified by visual inspection (comparison with front and back photographs) that is emitting electromagnetic signals, typically using a non-legitimate data transmission channel to send data to a non-legitimate receiver.

The electromagnetic signature of the DVA is measured in iii in order to evaluate any interference from it on the electromagnetic signature of the DSA, considering that both are single emitters in the environment in which the test is being carried out, as described in i.

The most likely cause of any assertion failure in iv.1, having the embedded software been previously verified via hash comparison, is the existence of a hardware component not identified in the visual inspection (comparison with the front and back photographs) that is causing variation in the outputs generated by one or more Target Application(s).

The most likely cause of the electromagnetic signature corruption identified in iv.2 is the existence of a hardware component not identified in the visual inspection (checking the front and back photographs), nor in the assertion tests, which is emitting electromagnetic signals, usually using a non-legitimate data transmission channel to send data to a non-legitimate receiver.

In one embodiment, MAIHSE is used to authenticate a CONSERVOMETRO as described in co-pending patent application BR 102019021409-0, the CONSERVOMETRO being the DSA. Authentication of a CONSERVOMETRO ensures that this device is correctly performing: readings of input signals, the due computations and writings of output signals. Thus, in one embodiment, the use of MAIHSE in a CONSERVOMETRO ensures that there is no tampering, either for more or for less, in the computation of Conservation Credits, as well as that no information is being diverted to a third party improperly through some illegitimate communication channel grafted by this or another third party.

### Example 3 - Recording of Conservometrics and Sustainability metrics of a renewable energy generation system on the DLT-type XRP Ledger blockchain network

In this example, the recording of conservometrics and sustainability metrics are carried out using the public DLT network called XRP Ledger. The XRP Ledger is a public blockchain where any computer can connect to the peer-to-peer network, responsible for managing the accounting ledger.

In this example, the sustainability metric or conservometric is the amount of energy produced by an electrical power generation facility using a renewable energy source such as solar photovoltaic energy. The unit used is the kilowatt-hour (kWh).

In this embodiment, the measurement of the energy produced and the processing of the data are performed by a device called "Joker," as described in the co-pending patent application with common inventors and entitled "Device and system for measuring quantities, processing data and integration with a system for issuing digital assets or tokens." Subsequently, the Joker builds and digitally signs a transaction containing information on the amount of energy produced in the form of tokens, herein referred to as token-device, and sends this transaction to the XRP Ledger network, through its communication interface.

In one embodiment, communication with the XRP Ledger network is performed indirectly, via a node (computer) participating in the network. In another embodiment, communication with the XRP Ledger network is performed directly, when the measuring device itself is a node of the network. In the indirect case, the connection with the network node is performed by one or more different types of communication technology, optionally using intermediary devices (gateways).

The amount of energy produced by the solar generator is used to determine the amount of device tokens that are sent from the device account on the XRP Ledger to a second account, called a SWAP account, recording this information on the blockchain. For each type of project, the device token has a unique identification (symbol) that characterizes the quantity being measured and/or the type of sustainable project/attitude or conservometric that originated it. In this example, the device token is identified on the XRP Ledger network by the symbol kWh. Upon receiving the amount of kWh tokens sent by the measurement device, the XRP Ledger network automatically exchanges these tokens for TGO reward tokens by sending them to the address of the XRP Ledger account of the owner/responsible for the solar energy generator (SWAP account), previously configured on the measurement device.

In one embodiment, the automatic exchange of device tokens for TGO reward tokens (from ThingsGo.Online) is performed through one or more different methods, depending on the availability of features and characteristics of the blockchain network used. The conversion ratio or rate between the device token and the TGO reward token is defined by the entity responsible for issuing the TGO token. In this embodiment, which uses the XRP Ledger network, this exchange is performed through the use of smart-contracts-type features or by sending cross-currency payments-type transactions.

In the first form, the Joker device sends the kWh token to the address of the XRP Ledger account responsible for executing the smart contract code, established by the entity issuing the TGO tokens, which performs the exchange of the kWh token for the TGO token. In this same transaction, the Joker also informs the address of the destination account where the TGO tokens should be sent by the smart contract.

In the second form, the entity issuing the TGO tokens sets a limit order to exchange kWh tokens for TGO tokens in the order book of the native decentralized exchange (DEX) of the XRP Ledger, based on the quote it sets. To perform the exchange of the kWh token for TGO token, the Joker simply sends a cross-currency payment order to the SWAP account address, where the sending currency is the kWh token and the destination currency is the TGO token. The XRP Ledger network receives this payment transaction and searches the DEX order book for a more economical path to perform the automatic exchange of the kWh token for TGO, which is most likely through that limit order to exchange the kWh token for TGO sent by the entity issuing the TGO token.

With the TGO tokens, the owner/responsible for the power generation system is able to trade these tokens for other digital assets, for example the XRP token, directly on the XRP Ledger DEX or on centralized exchanges where the TGO token is listed for trading. Alternatively, the owner can send the TGO tokens directly to the TGO token distribution account address on the XRP Ledger and receive in return a conservometric credit certificate or support for sustainable projects and attitudes, called GIVEBACK.

In one embodiment, this certificate is issued on a blockchain network, which is the XRP Ledger itself or another, and has the format of a notarized note of a non-fungible token (NFT), or another appropriate information storage format.

### Example 4 - Recording of Conservometrics and Sustainability metrics on the XRP Ledger, related to the energy efficiency of the validator nodes of the XRP Ledger blockchain network itself

In this embodiment, the system and method of the invention measures the energy consumption of the nodes of blockchain networks of the XRP ledger type, compares them with other forms of asset processing (such as Bitcoin) and tokenizes the relative energy savings and/or carbon footprint reduction resulting from the use of XRP technology.

In this context, comparative assessments available from more recent sources show that the numbers vary according to the evolution of the respective technologies. However, the large difference between the environmental footprint of the different technologies is striking. The document "Measuring the Environmental Impact of Cryptocurrency," published by Ripple Labs, reveals the energy consumption of asset transactions in a digital environment according to the technology used, summarized in Table 1 below:

**Table 1 - Average environmental footprint per transaction of selected asset transaction technologies**

| **Technology/Active** | **Energy consumption, kWh** |
|---|---|
| Bitcoin (2020) | 700 |
| Ethereum (2020) | 30 |
| XRP ledger (2019) | 0.0079 |
| Printed Money ($, 2018) | 0.044 |

From the table above, it can be seen that the use of the XRP ledger is substantially smaller than all other transaction technologies listed, being approximately 88,000 times smaller when compared to the technology used in Bitcoin and approximately 3,800 times smaller than the technology used in Ethereum. The magnitude of the differences is very substantial and justifies the adoption, in the present invention, of the distributed ledger technology that uses DAG (Direct Acyclic Graphs) in the consensus mechanism, as is the case with the XRP ledger.

Similar to what was described in Example 3, the recording of conservometrics and sustainability metrics in this example is performed using the XRP Ledger blockchain network.

In this embodiment, the sustainability metrics or conservometrics is the efficiency of the electric energy consumption of the computers which are part of the validation knots of the transactions in the XRP Ledger. The unit of the used energy for this metric is the saved kilowatt hour (kWh).

In this embodiment, the measurement of the electrical energy consumed by each validator node of the XRP Ledger network and also the processing of the data are carried out by a device called "Joker."

In one embodiment of this example, the Joker is a stand-alone measurement device composed of hardware and software that is inserted between the computer's power plug (validator node) and the electrical outlet that supplies power to the computer.

In another embodiment of this example, Joker is implemented in the form of software - independent or integrated into the XRP Ledger software - installed on the computer (validator node), responsible for consulting, on the computer itself (e.g.: information in the BIOS), the electrical energy consumption of its main components (e.g.: processor, motherboard, memory, storage units, network, etc.).

In either embodiment, Joker builds and digitally signs a transaction containing information on the amount of electricity consumption avoided by using XRP Ledger technology, compared to other related technologies that have high energy consumption. This information is recorded in the form of a kWh device token. In the case of Joker's implementation as an independent device, it sends the transaction in question to the XRP Ledger network, through its communication interface. In the case of the implementation in software installed on the computer itself (validator node), Joker uses the computer's own software interfaces and libraries to send the kWh device token through a transaction on the XRP Ledger.

The amount of energy saved by the XRP Ledger network validator node is used to determine the amount of kWh device tokens, which are sent from the device account on the XRP Ledger to a second account, called a SWAP account, recording this information on the blockchain.

Upon receiving the amount of kWh tokens sent by the measurement device (Joker), the XRPL Ledger network automatically exchanges these tokens for TGO reward tokens by sending them to the XRP Ledger account address (SWAP account) of the owner/responsible for the validator node, previously configured in the measurement device (Joker).

The process of automatically exchanging kWh device tokens for TGO reward tokens, as well as the process of returning TGO tokens in exchange for the GIVEBACK certificate, are similar to the respective processes detailed in example 3.

The applicant, when filing this application with the competent body/guarantor, seeks and intends to: (i) name the authors/inventors in respect of their respective moral, copyright and patrimonial rights related to their works; (ii) unequivocally indicate that he/she is the holder of the business or industrial secret and the holder of any form of intellectual property derived therefrom and that the applicant desires; (iii) describe in detail the content of the creations and the secret, proving their existence in the physical and legal planes; (iv) obtain protection for his/her creations of the spirit, as provided for in the Copyright Law; (v) establish the relationship between the examples/realizations and the creative, ornamental, distinctive or inventive concept according to the applicant's cognition and its context, to clearly demonstrate the scope of his/her protected and/or protectable intangible asset; (vi) request and obtain the additional rights provided for patents, if the applicant chooses to continue with the administrative procedure until the end.

Any future disclosure or publication of this document does not, in itself, constitute authorization for commercial use by third parties. Even if the content becomes part of the physical world accessible to third parties, the disclosure or publication of this document under the terms of the law does not eliminate the legal status of secret, serving only and solely the spirit of the Law to: (i) serve as proof that the creator created the objects described herein and expressed them in a physical medium, which is this report itself; (ii) unequivocally indicate its owner/holder and authors/inventor(s); (iii) notify third parties of the existence of the creations and of the aforementioned industrial secret and its content, for which intellectual protection is or will be requested under the terms of the Law, including patent protection and the date of its filing, from which priority rights will be granted and the term of validity of patent exclusivity may begin, if applicable; and (iv) assist in the technological and economic development of the Country, from the revelation of the creation, if this occurs, and the authorization of the use of the secret solely and exceptionally for the purposes of studies and/or development of new improvements, thereby avoiding parallel reinvestment by third parties in the development of the same asset.

It is hereby noted that any commercial use requires authorization from the authors or the owner/holder and that unauthorized use gives rise to sanctions provided for by law. In this context, given the extensive detail in which the creation, concept and examples were disclosed by the applicant, those skilled in the art may, without much effort, consider other ways of implementing the present creation and/or invention in ways that are not identical to those merely exemplified above. Such ways are or may be considered as within the scope of one or more of the attached claims.

## Claims

1. An integrated system and method for issuing digital assets or tokens associated with environmental conservation and sustainability metrics **characterized in that** it comprises:
- one or more devices for measuring physical entities/quantities associated with the sustainability, conservation or recovery of environmental assets, providing environmental conservation metrics that serve as physical ballast for digital assets; and
- a distributed digital registration process of authenticated metrics and the issuance of digital assets ballasted in said metrics.

2. The system and method according to claim 1, **characterized in that** they further comprise a process for issuing conservation credit certificates based on digital assets ballasted by environmental conservation and sustainability metrics, documented in a distributed digital registry or blockchain.

3. The system and method according to any one of claims 1 to 2, **characterized in that** the distributed digital registration process of the authenticated metrics is performed with distributed ledger technology that uses DAG (Direct Acyclic Graphs) in the consensus mechanism.

4. The system and method according to any one of claims 1 to 3, **characterized in that** said device for measuring physical entities/quantities comprises:
- a Joker base device with processing capacity, data storage and embedded computer program/software;
- an electronic board equipped with sensors for measuring physical quantities,
- one or more physical and logical interfaces to provide communication between the Joker processing unit and the board processing unit; and
- a network interface that uses network communication means to access a local computer network or the Internet and communicate with nodes in a blockchain network.

5. System and method according to any one of claims 1 to 3, **characterized in that** said device for measuring physical entities/quantities comprises:
- a Joker in the form of software embedded in a device for measuring the electrical power input of the computer that performs computations, obtaining from the device's primary memory the quantities read from the medium and computing the electrical power consumption metrics of the validating nodes (computers) of the XRP Ledger blockchain network; or
- a Joker in the form of a computer programming code installed in the validating nodes (computers) participating in the XRP Ledger blockchain network, which performs computations, obtaining from the primary memory of the computer where it is installed the quantities read directly from its motherboard.

6. The system and method according to any one of claims 1 to 5, **characterized in that** the tokenized Conservation Credits metric is the savings in electrical power and/or CO2 emitted by using XRP ledger blockchain technology.

7. The system and method according to any one of claims 1 to 5, **characterized in that** the tokenized Conservation Credits metric is sustainable electrical power generation from solar panels.

8. The system and method according to any one of claims 1 to 7, **characterized in that** they further comprise a device or method for verifying the authenticity of the hardware and software, for processing the signals measured in said measuring device and authenticating said metrics.

9. The system according to claim 8, **characterized in that** it comprises at least one authenticity checking device for connection to the device to be authenticated that comprises input and output interfaces, said authenticity checking device comprising at least one integrated authentication method of embedded hardware and software comprising the steps of:
- generating individual hashes in the authenticity checking device software and at the device to be authenticated;
- determining the electromagnetic signature of the device to be authenticated when powered on;
- assembling an identified record of the unique hardware and software device containing: generated hashes, generated signatures, serial number of the hardware device, established Similarity Threshold and date-time in milliseconds obtained at the time of assembly; and
- storing the identified record of the unique device in a remotely accessible database to check for similarity or dissimilarity.
